# EUROPÄISCHE PATENTANMELDUNG

(11) **EP 1 517 068 A2**
(43) Veröffentlichungstag der Anmeldung: **23.03.2005**
(21) Anmeldenummer: 04021170.8
(22) Anmeldetag: 07.09.2004
(51) Int. Cl.: F16H 61/28, F16H 63/30

(54) **Kraftfahrzeuggetriebe-Stellvorrichtung**

(30) Priorität: 17.09.2003 DE 10342829
(71) Anmelder: LuK Lamellen und Kupplungsbau Beteiligungs KG, 77815 Bühl (DE)
(72) Erfinder: McNab, Neil, Wellesbourne CV 35 9NB Warwickshire (GB); Lethbridge, James Anthony, CV31 2 HZ Warwickshire (GB); Morgan, Terry, CV32 7LE Leamington Spa Warwickshire (GB)

(57) **Zusammenfassung**

Die Erfindung betrifft eine Kraftfahrzeuggetriebe-Stellvorrichtung zum Erzeugen von Stellbewegungen, welche eine beweglich angeordnete Gewindespindel (14) aufweist, die mit ihrem Gewinde (38) in ein Gewinde (40) einer beweglich angeordneten Mutter (16) eingreift, so dass diese Gewindespindel (14) diese Mutter treibend belasten kann, und welche ferner ein beweglich sowie gegenüber der Mutter relativbeweglich angeordnetes Gehäuse (18) aufweist, sowie zwei zwischen der Mutter und dem Gehäuse angeordnete elastische Elemente (10,12), sowie ein Kraftfahrzeug-Getriebeeinrichtung mit einer Betätigungseinrichtung zum Steuern von Gangwechselvorgängen der Kraftfahrzeug-Getriebeeinrichtung, die eine derartige Kraftfahrzeuggetriebe-Stellvorrichtung aufweist, und eine Verwendung einer solchen Kraftfahrzeuggetriebe-Stellvorrichtung zum Betätigen einer Kraftfahrzeug-Getriebeeinrichtung.

## Beschreibung

Die Erfindung betrifft eine Kraftfahrzeuggetriebe-Stellvorrichtung zum Erzeugen von Stellbewegungen für Gangwechselvorgänge eines Kraftfahrzeuggetriebes, welche elastische Elemente aufweist, eine Verwendung einer solchen, sowie eine Kraftfahrzeuggetriebeeinrichtung mit einer solchen Kraftfahrzeuggetriebe-Stellvorrichtung.

Kraftfahrzeuggetriebe-Stellvorrichtungen bzw. Kraftfahrzeuggetriebe-Betätigungsvorrichtungen mit einer Stellvorrichtung, die ein elastisches Element aufweist, sind bereits aus den US-Patenten 6,003,395; 6,220,109 B1 sowie 6,003,649 bekannt. Dort werden insbesondere automatisierte Schaltgetriebe (ASG) mit einer derartigen Stellvorrichtung beschrieben. Das elastische Element kann Energie speichern. Aus diesen Druckschriften ist beispielsweise bekannt, dass ein elastisches Element in der Kraftübertragungsstrecke zwischen einem Betätigungs- bzw. Antriebselement und einem getriebeseitigen Schaltelement angeordnet wird. Ferner ist bekannt, dass ein solches elastisches Element voreinstellbar ist, d.h., dass seine Elastizität verändert werden kann, und vorgespannt ist (US 6,003,649). Weiter ist aus der US 6,003,649 bekannt, einen Anschlag vorzusehen, der die Verformung des elastischen Elements begrenzen kann.

Derartige Kraftfahrzeug-Stelleinrichtungen mit einem elastischen Element können auch als so genannte Schaltelastizitätseinheiten (Shift Elasticity Unit) bezeichnet werden.

Die US 6,003,649 zeigt zu verschiedene Darstellungen von Gestaltungen, bei denen eine Elastizität bzw. ein elastisches Element vorgesehen ist. Ferner sind in den genannte Druckschriften verschiedene Kraft-Weg-Verläufe dargestellt, die das Verhalten bei Verwendung der jeweiligen elastischen Elemente abbilden (US 6,003,649, US 6,220,109). Die US 6,003,649 sowie die US 6,220,109 nennen verschiedene Arten und Materialien solcher elastischer Elemente. Insbesondere werden dort auch verschiedene Federarten genannt, die verwendet werden können um die Elastizität zu bewirken.

In den Figuren der genannten Patentschriften sind ferner Gestaltungen gezeigt, die Vorschläge dafür beinhalten, wie solche Stellvorrichtungen bzw. Betätigungsvorrichtungen in einem Kraftfahrzeuggetriebe bzw. ein automatisiertes Schaltgetriebe gestaltet und angeordnet werden können.

Die dort gezeigten Gestaltungen sind besonders für automatisierte Schaltgetriebe geeignet.

Der Erfindung liegt die Aufgabe zugrunde, eine Kraftfahrzeuggetriebe-Stellvorrichtung zum Erzeugen von Stellbewegungen für Gangwechselvorgänge eines Kraftfahrzeuggetriebes zu schaffen, welche betriebssicher und kostengünstig herstellbar ist.

Gemäß einem besonderen Aspekt liegt der Erfindung die Aufgabe zugrunde, eine Kraftfahrzeuggetriebe-Stellvorrichtung zu schaffen, die sich für Erzeugen von Stellvorgängen im Rahmen von Gangwechselvorgängen in Parallelschaltgetrieben eignet.

Erfindungsgemäß wird insbesondere eine Kraftfahrzeuggetriebe-Stellvorrichtung zum Erzeugen von Stellbewegungen vorgeschlagen, welche eine beweglich angeordnete Gewindespindel aufweist, die mit ihrem Gewinde in ein Gewinde einer beweglich angeordneten Mutter eingreift, so dass diese Gewindespindel diese Mutter belasten bzw. treibend belasten kann, und welche ferner ein beweglich sowie gegenüber der Mutter relativbeweglich angeordnetes Gehäuse aufweist, sowie zwei elastische Elemente, wobei ein erstes dieser elastischen Elemente so zwischen der Mutter und dem Gehäuse angeordnet ist, dass die Mutter das Gehäuse in einer ersten Orientierung ihrer Axialrichtung über dieses erste elastische Element belasten bzw. treibend belasten kann, und wobei das zweite dieser elastischen Elemente so zwischen der Mutter und dem Gehäuse angeordnet ist, dass die Mutter das Gehäuse über dieses zweite elastische Element in einer zweiten, der ersten entgegen gesetzten, Orientierung ihrer Axialrichtung belasten bzw. treibend belasten kann.

Vorzugsweise lassen sich mit der Kraftfahrzeuggetriebe-Stellvorrichtung Stellbewegungen für Gangwechselvorgänge eines Kraftfahrzeuggetriebes erzeugen.

Es kann vorgesehen sein, dass zwischen der Kraftfahrzeuggetriebe-Stellvorrichtung und dem Getriebe weitere Bauelement vorgesehen sind.

Bevorzugt ist die Gewindespindel drehbeweglich angeordnet bzw. gelagert bzw. drehbeweglich und axialfest.

Bevorzugt ist vorgesehen, dass das erste bzw. zweite elastische Element jeweils so zwischen der Mutter und dem Gehäuse angeordnet ist, dass die Mutter das erste bzw. zweite elastische Element, abhängig von der Bewegungsrichtung der Mutter, sofort belastet, wenn die Mutter bewegt wird. Es kann allerdings auch vorgesehen sein, dass ein gewisses Spiel bzw. eine Art Leerhub vorgesehen ist, welcher bewirkt, dass die Mutter zunächst bewegt wird, ehe sie das jeweilige elastische Element belastet und über die Belastung dieses elastischen Elements wiederum das Gehäuse in der einen oder anderen Axialrichtung belastet wird.

Bevorzugt weist das Gehäuse in zwei gegenüberliegenden Gehäusewänden bzw. Gehäusewandabschnitten jeweils eine Öffnung, insbesondere Durchgangsöffnung, auf, wobei sich die Gewindespindel durch diese beiden Durchgangsöffnungen erstreckt. Solche Durchgangsöffnungen können beispielsweise in einer Gehäusewand- oder Gehäuseschale angeordnet sein. Bevorzugt ist ferner, dass solche Durchgangsöffnungen in einem Gehäusedeckel bzw. Stutzen bzw. Pfropfen angeordnet sind, der in das (verbleibende) Gehäuse eingesetzt oder eingeschraubt ist.

Ein solcher Deckel kann insbesondere auch als Stutzen bzw. Pfropfen gestattet sein. Zur Vereinfachung wird im folgenden von Deckel bzw. Gehäusedeckel gesprochen, wobei anzumerken ist, dass vorzugsweise ein solcher (Gehäuse)Deckel ein Stutzen bzw. Pfropfen ist, so dass der Begriff (Gehäuse)Deckel weit gefasst zu verstehen ist, und insbesondere einen Stutzen bzw. Pfropfen mit abdeckt.

Der angesprochene Deckel kann insbesondere ein lösbarer Deckel sein. Die Lösbarkeit kann insbesondere so sein, dass der Deckel eine Öffnung im Gehäuse verschließen bzw. teilweise verschließen kann oder freigeben kann.

In einer bevorzugten Gestaltung weist ein solcher Deckel auf seiner Außenmantelfläche ein Gewinde auf, mit dem es in eine Öffnung im Gehäuse geschraubt ist, die ebenfalls ein Gewinde aufweist. Es ist vorzugsweise vorgesehen sein, dass sich die Spindel an zwei Stellen aus dem Gehäuse raus erstreckt, wobei an diesen Stellen jeweils ein abnehmbarer bzw. lösbarer Deckel vorgesehen ist, der mit einer Durchgangsöffnung versehen ist, und in das Gehäuse geschraubt ist, oder auf andere Weise dort lösbar befestigt ist.

Es kann aber auch vorgesehen sein, dass nur ein Deckel der genannten Art vorgesehen ist, und die Gewindespindel sich an einer anderen Stelle durch eine in einer festen Gehäusewand angeordnete Durchgangsöffnung des Gehäuses erstreckt.

Bevorzugt ist ferner, dass sich die Gewindespindel an zwei Stellen aus dem Gehäuse erstreckt, wobei an keiner dieser Stellen ein Gehäusedeckel der genannten Art vorgesehen ist.

Vorzugsweise ist das Gehäuse mittels einer Verdrehsicherung gegen Verdrehung gesichert. Eine solche Verdrehsicherung kann beispielsweise eine Linearführung aufweisen. In einer bevorzugten Gestaltung ist eine derartige Linearführung so angeordnet, dass sie eine im Wesentlichen parallel zur Spindel angeordnete Führungsstange aufweist, die zur Spindel beabstandet ist und sich durch das Gehäuse erstreckt. Die Führungsstange erstreckt sich beispielsweise so durch das Gehäuse bzw. eine Gehäuseöffnung, dass sie ihren radialen Richtungen bzw. in radialer Richtung - gegebenenfalls mit geringem Spiel - am Gehäuse gehalten wird. Besonders bevorzugt stützt sich dabei die Gewindespindel - gegebenenfalls über die Mutter - so gegen das Gehäuse ab, dass das Gehäuse bzgl. der radialen Richtung bzw. den radialen Richtungen der Gewindespindel - gegebenenfalls mit geringem Spiels - an dieser gehalten wird. Es kann beispielsweise vorgesehen sein, dass zur Aufnahme dieser Führungsstange eine separate Durchgangsöffnung oder mehrere separate Durchgangsöffnungen im Gehäuse vorgesehen sind. Besonders bevorzugt sichert die Verdrehsicherung das Gehäuse gegen Verdrehung um die Spindelachse bzw. eine hierzu parallele Achse.

In einer bevorzugten Gestaltung ist das Gehäuse gegenüber der Mutter gegen Verdrehung gesichert. Eine solche Verdrehsicherung, mittels welcher die Mutter gegenüber dem Gehäuse gegen Verdrehung gesichert ist, kann beispielsweise so sein, dass diese Verdrehsicherung eine Längs- bzw. Axialverschiebung von Mutter gegenüber Gehäuse ermöglicht, allerdings ein Verdrehen im Wesentlichen verhindert. Beispielsweise kann eine Längsnut am Gehäuse vorgesehen sein, in welche eine an der Mutter angeordnete Passfeder eingreift, oder umgekehrt.

In bevorzugter Gestaltung ist die Mutter in dem Gehäuse gefangen. Die Mutter kann beispielsweise axial gefangen sein. Sie kann auch radial gefangen sein. Besonders bevorzugt ist die Kombination dieser beiden Gestaltungen.

Bevorzugt ist das Gehäuse ein Gehäuse der Mutter bzw. eine die Mutter einschließendes oder fangendes Gehäuse.

In bevorzugter Gestaltung ist im Gehäuse eine Kammer vorgesehen, in welcher die beiden elastischen Elemente sowie die Mutter angeordnet sind. Besonders bevorzugt ist vorgesehen, dass in diese Kammer Durchgangsöffnungen des Gehäuses münden, durch welche sich die Gewindespindel erstreckt. Bevorzugt ist ferner, dass eine Führungsstange einer Verdrehsicherung für das Gehäuse sich durch das Gehäuse erstreckt, und zwar außerhalb einer Kammer der angesprochenen Art.

In einer bevorzugten Gestaltung ist das Gehäuse mit wenigstens einer Schaltwelle gekoppelt. Dies kann eine direkte oder eine indirekte Kopplung sein, also so gestaltet sein, dass das Gehäuse direkt, beispielsweise über eine Verzahnung oder dergleichen, in eine Schaltwelle bzw. eine dort angeordnete Verzahnung eingreift, oder so, dass Elemente zwischengeschaltet sind. Vorzugsweise ist vorgesehen, dass das Gehäuse eine solche Schaltwelle treibend belasten kann. Bevorzugt ist ferner, dass das Gehäuse mit wenigstens einem Schaltfinger gekoppelt ist, wobei auch hier die Kopplung direkt oder indirekt sein kann. Auch hier ist besonders bevorzugt, dass das Gehäuse den Schaltfinger treibend belasten kann. Das Gehäuse ist bevorzugt relativbeweglich gegenüber der Schaltwelle und / oder dem Schaltfinger angeordnet. Bevorzugt ist ferner, dass das Gehäuse fest mit der Schaltwelle und / oder dem Schaltfinger verbunden ist. Ein solcher Schaltfinger ist in besonders bevorzugter Gestaltung an einer Schaltwelle der genannten Art angeordnet. In einer bevorzugten Gestaltung ist der Schaltfinger drehfest mit der Schaltwelle verbunden. Dabei kann er beispielsweise mit der Schaltwelle axiaffest gekoppelt sein, oder axial beweglich an dieser angeordnet sein.

Das Gehäuse ist vorzugsweise mit einer Verzahnung versehen, und war besonders bevorzugt mit einer an der Gehäuseaußenseite angeordneten Verzahnung. Eine solche Verzahnung kann beispielsweise eine Zahnstange bzw. ein zahnstangenähnliches Element sein. Vorzugsweise greift eine solche am Gehäuse angeordnete Verzahnung bzw. eine solche Zahnstange in ein Zahnrad oder ein Zahnradsegment ein, um dieses in Betrieb zu belasten bzw. treibend zu belasten. Besonders bevorzugt ist ein solches Zahnradsegment bzw. ein solches Zahnrad an einer Schaltwelle oder an einem Schaltfinger angeordnet.

Das erste elastische Element ist in bevorzugter Gestaltung eine Feder. Ferner ist bevorzugt, dass das zweite elastische Element eine Feder ist. Es kann vorgesehen sein, dass eine solche Feder jeweils so angeordnet ist, dass sei als Druckfeder wirkt.

In besonders bevorzugter Gestaltung ist das erste elastische Element eine Tellerfeder. Besonders bevorzugt ist ferner, dass das zweite elastische Element eine Tellerfeder ist. Es kann aber auch vorgesehen sein, dass elastische Elemente anderer Art vorgesehen sind. Die elastischen Elemente wirken in besonders bevorzugter Gestaltung im Betrieb als Energiespeicher bzw. als Energiespeicher, der Antriebsenergie bzw. einen Teil der Antriebsenergie speichert.

In einer besonders bevorzugten Gestaltung ist vorgesehen, dass das Gehäuse eine Verzahnung bzw. Zahnstange trägt, und diese Zahnstange bzw. diese Verzahnung in ein Zahnrad bzw. ein Zahnradsegment eingreift, welche an dem Schaltfinger und / oder an der Schaltstange angeordnet ist, so dass der Schaltfinger und / oder die Schaltstange im Betrieb treibend belastet werden können. In einer besonders bevorzugten Gestaltung ist vorgesehen, dass bei Axialverschiebung des Gehäuses ein solches Zahnrad bzw. Zahnradsegment schwenkend oder drehend bewegt wird. Bevorzugt ist ferner, dass der Schaltfinger eine Schaltschiene belasten kann bzw. im Betrieb treibend belastet oder bei entsprechender Relativstellung treibend belastet. Besonders bevorzugt ist vorgesehen, dass der Schaltfinger in einer Schwenkbewegung im Betrieb ausführt und über diese Schwenkbewegung eine solche Schaltschiene translatorisch in eine erste Richtung oder in eine zweite Richtung bewegen kann bzw. bewegt, bzw. entsprechend belasten kann, um eine derartige Bewegung hervorzurufen.

Vorzugsweise ist das erste und / oder das zweite elastische Element vorgespannt.

Besonders bevorzugt ist eine Einstelleinrichtung vorgesehen, mittels welcher eine solche Vorspannung des ersten und / oder des zweiten elastischen Elements einstellbar ist. Es kann vorgesehen sein, dass eine Einstelleinrichtung so gestaltet ist, dass von der Gehäuseaußenseite diese Vorspannung einstellbar ist. In bevorzugter Gestaltung ist eine solche Einstelleinrichtung ein Gehäusedeckel der genannten Art, also ein solcher Deckel, der im Gehäuse verschraubt ist, und durch welchen sich gegebenenfalls die Gewindespindel erstreckt.

In bevorzugter Weiterbildung der Erfindung ist eine solche Einstelleinrichtung so gestaltet, dass durch sie gleichzeitig das erste und das zweite elastische Element eingestellt werden kann, bzw. die Vorspannung dieser Elemente gleichzeitig bzw. simultan eingestellt werden kann.

Vorzugsweise ist wenigstens ein erstes Anschlagmittel vorgesehen, durch welches der Verformungs- bzw. Federweg des ersten elastischen Elements bzw. der ersten elastischen Feder begrenzt ist. Es kann beispielsweise auch vorgesehen sein, dass ein solches erstes Anschlagmittel einstellbar ist, so dass die Anschlagposition eingestellt werden kann. Das erste Anschlagmittel ist vorzugsweise so, dass eine Anschlagposition erreicht ist, bevor das erste elastische Element sich maximal verformt hat bzw. maximal komprimiert ist, bzw. - insbesondere bei als Feder gestalteten erstem elastischem Element - die Feder ihren maximalen Federweg bzw. die minimale Federlänge erreicht hat. Beispielsweise kann dies so sein, dass die Feder eine Kompressionsfeder ist und die Anschlagmittel anschlagen bzw. in eine Anschlagposition gehen, bevor diese Feder völlig komprimiert ist.

In entsprechender Weise kann auch ein zweites Anschlagmittel vorgesehen sein, das in gleicher bzw. entsprechender Weise gestaltet und / oder angeordnet ist wie das erste elastische Element, und das für das zweite elastische Element bzw. die zweite Feder vorgesehen ist.

In bevorzugter Gestaltung weist die Mutter eine erste Vertiefung auf, in welcher das erste elastische Element aufgenommen wird. Es kann auch vorgesehen sein, dass die Mutter ergänzend oder alternativ eine zweite Vertiefung aufweist, in welcher das zweite elastische Element aufgenommen wird. Besonders bevorzugt ist an den beiden axialen Enden der Mutter jeweils eine Vertiefung vorgesehen, von denen eine erste Vertiefung ist, die das erste elastische Element bzw. die erste Feder aufnimmt, und die andere eine zweite Vertiefung ist, die das zweite elastische Element bzw. die zweite Feder aufnimmt. In besonders bevorzugter Gestaltung wirkt ein (jeweiliger) Oberflächenbereich der Mutter, der an eine derartige Vertiefung angrenzt, im Zusammenwirken mit einem Oberflächenabschnitt des Gehäuses, und zwar insbesondere einem auf der Innenseite des Gehäuses gelegenen Oberflächenabschnitt des Gehäuses, als erstes bzw. zweites Anschlagmittel.

Das erste und / oder das zweite Anschlagmittel ist vorzugsweise ein mechanisches Anschlagmittel.

In bevorzugter Gestaltung wird die Mutter in ihrem radial äußeren Bereich am Gehäuse geführt, und zwar insbesondere axial geführt. Die Mutter kontaktiert vorzugsweise im Wesentlichen das Gehäuse mit ihrem radial äußeren Bereich, wobei gegebenenfalls geringes Spiel gegeben ist.

Die Gewindespindel ist in besonders bevorzugter Gestaltung axial fest um ihre Längsachse drehbeweglich gelagert.

Vorzugsweise ist eine Antriebseinrichtung, wie beispielsweise ein Elektromotor, zum Antreiben der Gewindespindel vorgesehen. Eine solche Antriebseinrichtung kann direkt oder über weitere zwischengeschaltete Elemente mit der Gewindespindel gekoppelt sein. Bevorzugt kann die Drehrichtung der Motorausgangswelle einer als Elektromotor gestalteten Antriebseinrichtung umgeschaltet werden.

Bevorzugt ist ferner, dass ein elektronisches Steuergerät vorgesehen ist, mittels welchem der Elektromotor gesteuert werden kann. Ein solches elektronisches Steuergerät kann beispielsweise ein elektronisches Getriebesteuergerät sein.

Die erfindungsgemäße Gestaltung einer Stellvorrichtung, die auch als Schalt- bzw. Betätigungselastizitätsbaugruppe oder Schalt- bzw. Betätigungselastizitätseinheit oder - konstruktion bezeichnet werden kann, weist vorzugsweise die Charakteristiken bzw. Eigenschaften und Vorteile auf, die in den US-Patenten 6,003,395; 6,220,109 B1 sowie 6,003,649 in Bezug auf den Einsatz der elastischen Elemente genannt sind. Die erfindungsgemäße Gestaltung einer Stellvorrichtung ermöglicht durch ihrer Gestaltung und / oder die Anordnung ihrer Bauteile, dass sie auch für Getriebe eingesetzt werden kann, bei denen die bekannten Gestaltungen - aus Bauraumgründen oder dergleichen - weniger geeignet sind. Dies bedeutet allerdings nicht, dass die erfindungsgemäße Gestaltung diese Vorteile in jeder Ausgestaltung aufweisen muss; es wird vielmehr die Möglichkeit durch die Erfindung geschafften, derartige vorteilhafte Gestaltungen zu verwirklichen.

Die erfindungsgemäße Stellvorrichtung bzw. die erfindungsgemäße Schaltelastizitätskonstruktion ist vorzugsweise so, das elastische Elemente an jedem der beiden Enden einer mit Gewinde versehenen Mutter verwendet werden, die Elastizität zu einem anliegenden Muttergehäuse absorbieren können bzw. gewährleisten können.

Erfindungsgemäß wird ferner insbesondere eine Kraftfahrzeug-Getriebeeinrichtung mit einer Betätigungseinrichtung zum Steuern von Gangwechselvorgängen der Kraftfahrzeug-Getriebeeinrichtung vorgeschlagen, wobei mittels dieser Betätigungseinrichtung ein jeweiliger Gang gewählt werden kann, in einen jeweiligen Gang der Kraftfahrzeug-Getriebeeinrichtung geschaltet werden und die Kraftfahrzeug-Getriebeeinrichtung in Neutral geschaltet werden kann, wobei diese Betätigungseinrichtung eine erfindungsgemäße Kraftfahrzeuggetriebe-Stellvorrichtung aufweist.

Diese Kraftfahrzeug-Getriebeeinrichtung ist vorzugsweise als automatisiert betätigbare Kraftfahrzeug-Getriebeeinrichtung gestaltet. Sie kann beispielsweise als automatisiertes Schaltgetriebe geschaltet sein.

In besonders bevorzugter Gestaltung ist diese Kraftfahrzeug-Getriebeeinrichtung als Parallelschaltgetriebe (PSG) gestaltet. Besonders bevorzugt ist die Kraftfahrzeug-Getriebeeinrichtung ein Inline-Parallelschaltgetriebe. Es kann auch vorgesehen sein, dass die Kraftfahrzeug-Getriebeeinrichtung als unterbrechungsfreies Schaltgetriebe (USG) gestaltet ist.

Erfindungsgemäß wird ferner insbesondere vorgeschlagen, eine Kraftfahrzeuggetriebe-Stellvorrichtung der erfindungsgemäßen Art und / oder eine Betätigungsvorrichtung mit einer eine Kraftfahrzeuggetriebe-Stellvorrichtung der erfindungsgemäßen Art zum Betätigen einer Kraftfahrzeug-Getriebeeinrichtung zu verwenden. Besonders bevorzugt ist dabei, dass eine solche Stellvorrichtung bzw. Betätigungsvorrichtung zum Betätigen einer Kraftfahrzeug-Getriebeeinrichtung verwendet wird, die ein Parallelschaltgetriebe (PSG) ist. Bevorzugt ist erfindungsgemäß eine Verwendung der erfindungsgemäßen Stellvorrichtung in einer Betätigungsvorrichtung für ein Inline-Parallelschaltgetriebe eines Kraftfahrzeuges, welches in besonders bevorzugter Gestaltung dergestalt ist, wie es in der Britischen Patentanmeldung 0223531.5 beschrieben wird. In besonders bevorzugter Gestaltung ist vorgesehen, dass eine erfindungsgemäße Kraftfahrzeuggetriebe-Stellvorrichtung zum Schalten in Gänge der Kraftfahrzeug-Getriebeeinrichtung verwendet wird. Es kann beispielsweise vorgesehen sein, dass das Schalten in die Gänge mittels einer erfindungsgemäßen Stellvorrichtung durchgeführt wird. Alternativ oder ergänzend kann auch vorgesehen sein, dass das Schalten in Neutral bzw. das Rausnehmen der Gänge mittels einer erfindungsgemäßen Stellvorrichtung durchgeführt wird.

Eine erfindungsgemäße Stellvorrichtung kann allerdings auch dazu verwendet werden, das so genannte "Wählen" bei einer Kraftfahrzeug-Getriebeeinrichtung zu bewirken bzw. zu steuern. Es kann auch vorgesehen sein, dass eine erfindungsgemäße Stellvorrichtung sowohl zum "Wählen", als auch zum "Schalten" in einem Kraftfahrzeuggetriebe verwendet wird.

Die erfindungsgemäße Stellvorrichtung wird bevorzugt für Getriebebetätigungs- bzw. Getriebeschaltmechanismus verwendet, bei dem eine Gewindespindel zum Betätigen bzw. Schalten verwendet wird.

Im Folgenden werden anhand der Figuren beispielhafte Gestaltungen und Weiterbildungen der Erfindung erläutert, wodurch die Erfindung allerdings nicht beschränkt werden soll. Es zeigt:

Fig. 1 eine Schnittansicht einer beispielhaften erfindungsgemäßen Stellvorrichtung in einer ersten Stellung in schematischer Darstellung;

Fig. 2 die Gestaltung gemäß Fig. 1 in einer zweiten Stellung;

Fig. 3 eine beispielhafte erfindungsgemäße Stellvorrichtung, die beispielsweise auch die Stellvorrichtung gemäß Fig. 1 und 2 sein kann, in schematischer Explosionsansicht; und

Fig. 4 eine beispielhafte erfindungsgemäße Stellvorrichtung, die beispielsweise auch die Stellvorrichtung gemäß Fig. 1 und 2 und / oder Fig. 3 sein kann, in schematischer dreidimensionaler Ansicht.

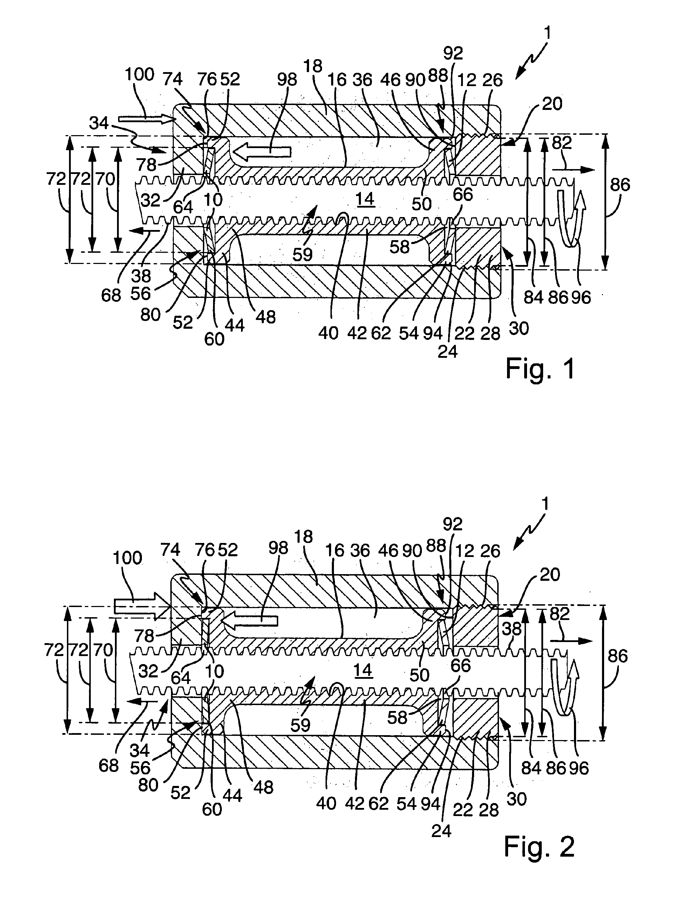

Fig. 1 zeigt eine beispielhafte Gestaltung einer erfindungsgemäßen Stellvorrichtung in geschnittener Ansicht in einer ersten Stellung.

Die in Fig. 1 gezeigte Betätigungselastizitäts- bzw. Schaltelastizitätsbaugruppe bzw. Kraftfahrzeuggetriebe-Stellvorrichtung 1 weist eine erste Energiespeichereinrichtung 10 bzw. ein erstes elastisches Element 10 auf sowie eine zweite Energiespeichereinrichtung 12 bzw. ein zweites elastisches Element 12. Ferner weist die Kraftfahrzeuggetriebe-Stellvorrichtung 1 eine Gewindespindel 14 auf, eine Mutter 16 sowie ein Gehäuse 18 auf.

Das Gehäuse 18 weist eine dritte Gehäuseöffnung 20 auf, an bzw. in welcher ein Deckel bzw. ein Stutzen bzw. ein Pfropfen 22 angeordnet ist, der zur Vereinfachung im folgenden als Deckel 22 bezeichnet wird, und insbesondere als Stutzten oder Pfropfen gestaltet sein kann. Dieser Deckel 22 ist verstellbar. In der Gestaltung gemäß Fig. 1 ist dieser Deckel 22 lösbar und so abnehmbar, dass er vollständig vom restlichen Gehäuse 18 entfernt werden kann. Es kann auch vorgesehen sein, dass dieser Deckel 22 in seiner gelösten bzw. offenen Stellung noch am Gehäuse 18 gehalten wird.

Der Deckel 22 trägt ein Gewinde 24, das mit einem am Gehäuse 18 angeordneten Gewinde 26 verschraubt ist. Hierdurch wird in der Gestaltung gemäß Fig. 1 eine Einstelleinrichtung zum Einstellen der Vorspannung der elastischen Elemente 10, 12 geschaffen. Darüber hinaus kann der Deckel 22 Montage- bzw. Demontagezwecken dienen.

Es sei allerdings angemerkt, dass eine Einstellbarkeit der Vorspannung der elastischen Elemente 10, 12 auch auf andere Art erreicht werden kann. Beispielsweise kann vorgesehen sein, dass zur Einstellung der Vorspannung Abstandshalter verwendet werden, die in ihrer Anzahl variiert werden können, um unterschiedliche Vorspannungen zur erreichen. Solche Abstandshalter können beispielsweise im Bereich des jeweiligen elastischen Elements 10, 12 positioniert werden. Auch zur Montage bzw. Demontage können - alternativ oder ergänzend - andere Gestaltungen vorgesehen sein, wie beispielsweise eine Gehäuselängsteilung oder dergleichen.

In der Gestaltung gemäß Fig. 1 ist das am Gehäuse 18 angeordnete Gewinde 26 ein in der dritten Gehäuseöffnung 20 vorgesehenes Innengewinde. Das vom Deckel 22 getragene Gewinde 24 ist in Fig. 1 als Außengewinde gestaltet und kann mit dem Innengewinde 26 verschraubt werden.

Der in der dritten Gehäuseöffnung 20 aufgenommene Deckel bzw. Stutzen 22 bildet eine Gehäusewand bzw. einen zweiten Gehäusewandabschnitt 28 des Gehäuses 18. Der Deckel 22 ist mit einer Öffnung 30 versehen, die als Durchgangsbohrung bzw. Durchgangsöffnung 30 gestaltet ist, und die eine zweite Gehäuseöffnung 30 bildet. Diese zweite Gehäuseöffnung 30 ist in der Gestaltung gemäß Fig. 1 im Wesentlichen konzentrisch zum Gewinde 24 des Deckels bzw. Stutzens 22 angeordnet, so dass die zweite Gehäuseöffnung 30 in unterschiedlichen Stellungen bzw. Schraubstellungen des Deckels 22 seine radiale Lage beibehält.

In einer der Gehäusewand mit dem zweiten Gehäusewandabschnitt 28 bzw. dem Deckel 22 gegenüberliegenden ersten Gehäusewand bzw. ersten Gehäusewandabschnitt 32 des Gehäuses 18 ist eine erste Gehäuseöffnung 34 vorgesehen, die als Durchgangsöffnung bzw. Durchgangsbohrung 34 gestaltet ist.

Diese im ersten Gehäusewandabschnitt 32 vorgesehene erste Gehäuseöffnung 34 ist konzentrisch zur in der gegenüberliegenden Gehäusewand bzw. im Deckel 22 vorgesehenen zweiten Gehäuseöffnung 30 angeordnet. Die zweite 30 und die erste Gehäuseöffnung 34 sind jeweils zylindrisch gestaltet und weisen den gleichen Innendurchmesser auf. Es können aber auch unterschiedliche Innendurchmesser vorgesehen sein. Ferner können diese Öffnungen 30, 34 auch andere Öffnungsquerschnitte aufweisen und / oder gestuft gestaltet sein.

Es kann auch vorgesehen sein, dass in dem zweiten Gehäusewandabschnitt 32 des Gehäuses 18 ebenfalls ein Deckel bzw. ein Stutzen bzw. ein Pfropfen vorgesehen ist, in welchem die erste Gehäuseöffnung 34 angeordnet ist. Dieser kann hinsichtlich seiner Gestaltung und Anordnung beispielsweise so sein, wie es in Bezug auf den Deckel 22 beschreiben wurde. Es kann also vorgesehen sein, dass in den gegenüberliegenden Gehäusewandabschnitten 28, 32 jeweils ein Deckel vorgesehen ist, der mit einer Öffnung versehen ist und gegebenenfalls im Gehäuse 18 verschraubt ist.

In dem Gehäuse 18 ist eine erste Kammer 36 angeordnet bzw. wird eine solche gebildet. Diese Kammer 36 kann beispielsweise ein im Wesentlichen zylindrischen Innenraum sein. Die Gehäuseöffnungen 30, 34 münden in diese Kammer 36.

Die Kammer 36 ist in der Gestaltung gemäß Fig. 1 - abgesehen von den Gehäuseöffnungen 30, 34 - im Wesentlichen geschlossen. Das Gehäuse 18 kann allerdings auch anders gestaltet sein. Es kann beispielsweise vorgesehen sein, dass das Gehäuse im Bereich der Kammer 36 axiale Begrenzungen aufweist, die über axial verlaufende Stege verbunden sind.

Die Gewindespindel 14 weist ein Gewinde 38 auf, das als Außengewinde gestaltet ist.

Die Mutter 16 weist ein Gewinde 40 auf, das als Innengewinde gestaltet ist. Die Mutter 16 kann beispielsweise so gestaltet sein, dass sie einen zylindrischen Abschnitt 42 aufweist, sowie einen oder mehrere radial von diesem zylindrischen Abschnitt 42 vorstehende Ringflansche 44, 46. Die Mutter 16 kann beispielsweise auch so gestaltet sein, dass sie zylindrisch ist und einen im Wesentlichen konstanten Außendurchmesser aufweist, oder auf andere Weise.

Beispielsweise sind, wie in Fig. 1 gezeigt, zwei Ringflansche 44, 46 vorgesehen, die im Wesentlichen an den beiden axialen Enden 48, 50 des zylindrischen Abschnitts 42 angeordnet sind. Diese Ringflansche 44, 46 weisen axiale Vorsprünge 52, 54. Diese axialen Vorsprünge 52, 54 erstrecken sich vom jeweiligen Ringflansche 44, 46 axial in der dem jeweils anderen Ringflansch 44, 46 abgewandten Richtung. Die axialen Vorsprünge 52, 54 sind radial außen am jeweiligen Ringflansch 44, 46 angeordnet. Die axialen Vorsprünge 52, 54 können beispielsweise zylindrisch geformt sein.

Der erste axiale Vorsprung 52, der am ersten Ringflansch 44 angeordnet ist, grenzt an eine erste Vertiefung 56 der Mutter 16. Der zweite axiale Vorsprung 54, der am zweiten Ringflansch 46 angeordnet ist, grenzt an eine zweite Vertiefung 58 der Mutter 16. Die Vertiefungen 54, 58 sind zylindrisch gestaltet und über die mit dem Gewinde 40 versehene Durchgangsöffnung 59 der Mutter 16 verbunden.

Die Mutter 16 kann beispielsweise - insbesondere abgesehen vom Gewinde - rotationssymmetrisch gestaltet sein. Die Mutter kann aber auch in anderer Form gestaltet sein. Es kann auch vorgesehen sein, dass sie Elemente oder Nuten oder dergleichen aufweist, welche beispielsweise Bestandteil einer Verdrehsicherung sein können, die das Gehäuse 18 gegenüber der Mutter 16 gegen Verdrehung sichert. Die Mutter 16 kann beispielsweise auch abgesehen von Elementen oder Nuten, die Bestandteil einer Verdrehsicherung sind, und abgesehen vom Gewinde rotationssymmetrisch gestaltet sein.

Das erste elastische Element 10 sowie das zweite elastische Element 12 können aus Metall oder Kunststoff oder einem sonstigen elastischen Material sein. Der erste Energiespeicher bzw. das erste elastische Element 10 sowie der zweite Energiespeicher bzw. das zweite elastische Element 12 ist gemäß Fig. 1 als Feder bzw. als Tellerfeder 60, 62 gestattet. Es kann auch vorgesehen sein, dass Energiespeicher bzw. elastische Elemente 10, 12 vorgesehen sind, die keine Tellerfedern sind, wie beispielsweise Kunststoffblöcke, Spiralfedern oder dergleichen.

Die erste Tellerfeder 60 sowie die zweite Tellerfeder 62 sind jeweils ringförmig gestaltet, so dass sie jeweils eine Durchgangsöffnung 64 bzw. 66 aufweisen.

Die Gewindespindel 14 ist drehbeweglich gelagert. Hierzu können geeignete Lagermittel vorgesehen sein. Die Gewindespindel 14 ist ferner axialfest gelagert. Sie kann sich um ihre Längsachse bzw. Drehachse drehen bzw. gedreht werden, und zwar wahlweise in der einen oder der entgegen gesetzten anderen Drehrichtung. Die Gewindespindel 14 kann mit der Ausgangswelle eines Elektromotors gekoppelt sein, der die Gewindespindel 14 entsprechend treibend belasten bzw. antreiben kann. Ferner kann ein elektronisches Steuergerät vorgesehen sein, das den Elektromotor ansteuert.

Die Gewindespindel 14 erstreckt sich durch die zweite Durchgangsöffnung 30 des Gehäuses 18 bzw. des Deckels 22 sowie durch die erste Durchgangsöffnung 34, die in dem Deckel 22 gegenüberliegenden Gehäusewand bzw. Gehäusewandabschnitt 32 des Gehäuses 18 vorgesehen ist.

Die Gewindespindel 14 greift mit ihrem Gewinde 38 in das Gewinde 40 der Mutter 16 ein, so dass die Gewindespindel 14 die Mutter 16 treibend belasten kann, bzw. antreiben kann.

Die Mutter 16 ist beweglich angeordnet und kann entlang der Gewindespindel 14 wandern, ist also gegenüber der Gewindespindel 14 relativbeweglich angeordnet.

Zwischen der Mutter 16 und dem Gehäuse 18 ist das erste elastische Element 10, das in der Gestaltung gemäß Fig. 1 als Tellerfeder 60 gestaltet ist, so angeordnet, dass die Mutter 16 das Gehäuse 18 in einer ersten Orientierung der Axialrichtung, die durch den Pfeil 68 schematisch angedeutet ist, über das erste elastische Element 10 treibend belasten kann.

Dies ist in der Gestaltung gemäß Fig. 1 so, dass das erste elastische Element 10 bzw. die Tellerfeder 60 axial zwischen einem Bereich der Mutter 16, der - wie in Fig. 1 gezeigt - der erste Ringflansch 44 der Mutter 16 sein kann oder eine endseitige Stirnfläche der Mutter 16, und einem Bereich des Gehäuses 18, der - wie in Fig. 1 gezeigt - der Gehäuseabschnitt 32 sein kann, angeordnet ist.

In der Gestaltung gemäß Fig. 1 kontaktiert das erste elastische Element 10 bzw. die Tellerfeder 60 in der unbelasteten Ruhelage axial diesen Bereich dieser Mutter 16 bzw. den ersten Ringflansch 44 der Mutter 16 sowie diesen Bereich des Gehäuses 18 bzw. den Gehäuseabschnitt 32. Dabei kann die Mutter 16 das Gehäuse 18 bereits treibend über das erste elastische Element 10 bzw. die Tellerfeder 60 in der ersten Orientierung 64 der Axialrichtung belasten, wenn die Gewindespindel 14 ausgehend von einer unbelasteten Ruhelage beginnt, die Mutter 16 in Richtung des Pfeils 68 treibend zu belasten. Es kann auch vorgesehen sein, dass ein solcher Kontakt zur Mutter 16 und / oder zum Gehäuse 18 in der unbelasteten Ruhelage nicht gegeben ist, so dass die Mutter das Gehäuse 18 erst treibend über das erste elastische Element 10 bzw. die Tellerfeder 60 belasten kann, wenn im Betrieb ein gewisses Spiel bzw. ein gewisser Leerhub überwunden wurde.

Die erste Tellerfeder 60 wird in der ersten Vertiefung 56 der Mutter 16 aufgenommen. In der Gestaltung gemäß Fig. 1 ist das Außenmaß bzw. der Außendurchmesser 70 der ersten Tellerfeder 60 kleiner ist als der Außendurchmesser bzw. das Außenmaß 72 der Mutter 16 bzw. des ersten Ringflansches 44 der Mutter 16. Die erste Tellerfeder 60 wird von dem ersten Ringflansches 44 gehalten bzw. stützt sich mit ihrem radial außen gelegenen Bereich radial innen an dem ersten axialen Vorsprung 52 ab. Sie kann dort auch gesichert, beispielsweise geklemmt, sein.

Der Verformungsweg des ersten elastischen Elements 10 bzw. der Federweg des der ersten Feder bzw. ersten Tellerfeder 60 ist durch ein erstes Anschlagmittel 74 begrenzt. In der Gestaltung gemäß Fig. 1 ist die erste Feder bzw. erste Tellerfeder 60 so angeordnet, dass sie im Betrieb auf Druck belastet wird bzw. komprimiert werden kann bzw. als Druckfeder wirkt. Dabei ist der Weg bzw. das Maß um bzw. auf den diese Feder komprimiert werden kann begrenzt.

Dies ist in der Gestaltung gemäß Fig. 1 so, dass ein erster Oberflächenbereich 76 des Gehäuses 18 im Zusammenwirken mit einem ersten Oberflächenbereich 78 der Mutter 16 als Anschlagmittel wirken. Dieser erste Oberflächenbereich 76 des Gehäuses 18 ist auf der Gehäuseinnenseite an der ersten Gehäusewand bzw. dem ersten Gehäusewandabschnitt 32 angeordnet und der erste Oberflächenbereich 78 der Mutter 16 ist eine Stirnfläche 80 des ersten axialen Vorsprungs 52.

Zwischen der Mutter 16 und dem Gehäuse 18 ist ferner das zweite elastische Element 12, das in der Gestaltung gemäß Fig. 1 als Tellerfeder 62 gestaltet ist, so angeordnet, dass die Mutter 16 das Gehäuse 18 in einer zweiten, der ersten entgegen gesetzten, Orientierung der Axialrichtung, die durch den Pfeil 82 schematisch angedeutet ist, über das zweite elastische Element 12 treibend belasten kann.

Dies ist in der Gestaltung gemäß Fig. 1 so, dass das zweite elastische Element 12 bzw. die Tellerfeder 62 axial zwischen einem Bereich der Mutter 16, der - wie in Fig. 1 gezeigt - der zweite Ringflansch 46 der Mutter 16 sein kann oder eine endseitige Stirnfläche der Mutter 16, und einem Bereich des Gehäuses 18, der - wie in Fig. 1 gezeigt - der Deckel 22 sein kann, angeordnet ist.

In der Gestaltung gemäß Fig. 1 kontaktiert das zweite elastische Element 12 bzw. die Tellerfeder 62 in der unbelasteten Ruhelage axial den Bereich dieser Mutter 16 bzw. den zweiten Ringflansch 46 der Mutter 16 sowie diesen Bereich des Gehäuses 18 bzw. den Deckel 22. Dabei kann die Mutter 16 das Gehäuse 18 bereits treibend über das zweite elastische Element 12 bzw. die Tellerfeder 62 in der zweiten Orientierung 82 der Axialrichtung belasten, wenn die Gewindespindel 14 ausgehend von einer unbelasteten Ruhelage beginnt, die Mutter 16 in Richtung des Pfeils 82 treibend zu belasten. Es kann auch vorgesehen sein, dass ein solcher Kontakt zur Mutter 16 und / oder zum Gehäuse 18 in der unbelasteten Ruhelage nicht gegeben ist, so dass die Mutter das Gehäuse 18 erst treibend über das zweite elastische Element 12 bzw. die Tellerfeder 62 belasten kann, wenn im Betrieb ein gewisses Spiel bzw. ein gewisser Leerhub überwunden wurde.

Die zweite Tellerfeder 62 wird in der zweiten Vertiefung 58 der Mutter 16 aufgenommen. In der Gestaltung gemäß Fig. 1 ist das Außenmaß bzw. der Außendurchmesser 84 der zweiten Tellerfeder 62 kleiner ist als der Außendurchmesser bzw. das Außenmaß 86 der Mutter 16 bzw. des zweiten Ringflansches 46 der Mutter 16. Die zweite Tellerfeder 62 wird von dem zweiten axialen Vorsprung 54 gehalten bzw. stützt sich mit ihrem radial außen gelegenen Bereich radial innen an dem zweiten Ringflansch 46 ab. Sie kann dort auch gesichert, beispielsweise geklemmt, sein.

Der Verformungsweg des zweiten elastischen Elements 12 bzw. der Federweg des der zweiten Feder bzw. zweiten Tellerfeder 62 ist durch ein zweites Anschlagmittel 88 begrenzt ist. In der Gestaltung gemäß Fig. 1 ist die zweite Feder bzw. zweite Tellerfeder 62 so angeordnet, dass sie im Betrieb auf Druck belastet wird bzw. komprimiert werden kann bzw. als Druckfeder wirkt. Dabei ist der Weg bzw. das Maß um bzw. auf den diese Feder komprimiert werden kann begrenzt.

Dies ist in der Gestaltung gemäß Fig. 1 so, dass ein zweiter Oberflächenbereich 90 des Gehäuses 18 im Zusammenwirken mit einem zweiten Oberflächenbereich 92 der Mutter 16 als Anschlagmittel wirken. Dieser zweite Oberflächenbereich 90 des Gehäuses 18 ist auf der Gehäuseinnenseite der zweiten Gehäusewand bzw. des zweiten Gehäusewandabschnitts 28 bzw. des Deckels 22 angeordnet und der zweite Oberflächenbereich 92 der Mutter 16 ist eine Stirnfläche 94 des zweiten axialen Vorsprungs 54.

Das Gehäuse 18 ist relativbeweglich gegenüber der Mutter 16 angeordnet. Ferner ist das Gehäuse 18 beweglich angeordnet.

Die Mutter 16 wird am Gehäuse 18 geführt. Dies ist so, dass der erste 44 sowie der zweite Ringflansch 46 der Mutter 16 bzw. der erste axiale Vorsprung 52 sowie der zweite axiale Vorsprung 54 sich radial außen am Gehäuse abstützen. Es kann auch vorgesehen sein, dass der axiale Zwischenraum zwischen den Ringflanschen 44, 46 mit materialausgefüllt ist bzw. die Mutter 16 einen im wesentlichen konstanten Außendurchmesser aufweist, und die Mutter 16 sich mit diesem radial außen gelegenen Bereich am Gehäuse 18 abstützt. Dabei kann radial auch ein gewisses Spiel zwischen der Mutter 16 und dem Gehäuse 18 gegeben sein.

Die elastischen Elemente 10 und 12 bzw. die Tellerfedern 60, 62 sowie die Mutter 16 werden im Gehäuse 18 bzw. in der Kammer 36 des Gehäuses 18 aufgenommen. Die Mutter 16 ist im Muttergehäuse bzw. Gehäuse 18 gefangen, und zwar insbesondere axial. Die Mutter 16 ist im Wesentlichen axial zwischen den Tellerfedern 60, 62 angeordnet.

Die elastischen Elemente 10 und 12 bzw. die Tellerfedern 60, 62 sind vorgespannt. Diese Vorspannung ist in der Gestaltung gemäß Fig. 1 einstellbar. Hierzu ist eine Einstelleinrichtung vorgesehen, die hier der in das Gehäuse 18 eingesetzte bzw. der im Gehäuse verschraubte Pfropfen bzw. Deckel 22 ist bzw. dieser im Gehäuse verschraubte Pfropfen bzw. Deckel 22 im Zusammenwirken mit dem im Gehäuse angeordneten Gewinde 34. Durch weiteres Einschrauben des Deckels 22 in das Gehäuse lässt sich die Vorspannung der elastischen Elemente 10 und 12 bzw. Tellerfedern 60, 62 erhöhen. Insbesondere kann vorgesehen sein, dass die Tellerfedern 60, 62 in einem vorbestimmten Maße durch das Maß der Tiefe vorgespannt werden, in dem der Deckel bzw. der Pfropfen 22 in das Gehäuse 18 eingeführt bzw. eingeschraubt wird. Es kann auch vorgesehen sein, dass keine Vorspannung erzeugt wird oder die elastischen Elemente 10 und 12 bzw. die Tellerfedern 60, 62 gegebenenfalls im unbelasteten Ruhezustand mit Spiel angeordnet sind. Bevorzugt lässt sich auch dieses mittels des Deckels 22 erreichen.

In der Gestaltung gemäß Fig. 1 lässt sich mittels des genau einen Deckels 22 sowohl die Vorspannung des ersten elastischen Elements 10 bzw. der ersten Tellerfedern 60 als auch die Vorspannung des zweiten elastischen Elements 12 bzw. der zweiten Tellerfedern 62 einstellen bzw. erzeugen.

Es kann auch vorgesehen sein, was in Fig. 1 nicht gezeigt ist - das die Anschlagpositionen der Anschlagmittel 74 und / oder 88 einstellbar sind. Hierzu kann beispielsweise eine Einstelleinrichtung vorgesehen sein. Dies kann beispielsweise auch so sein, dass die Anschlagsposition von außen einstellbar ist. Beispielsweise kann jeweils eine Schraube vorgesehen sein, die von außen in die erste bzw. zweite Gehäusewand bzw. den ersten bzw. zweiten Gehäusewandabschnitt 32, 28 bzw. Deckel 22 an einer Stelle eingeschraubt ist, auf die Stirnfläche 80 bzw. 94 des ersten bzw. zweiten axialen Vorsprungs 52, 54 zubewegt wird, so das diese Stirnfläche 80 bzw. 94 bzw. dieser Vorsprung anstelle der Innenoberfläche der ersten bzw. zweiten Gehäusewand bzw. des ersten bzw. zweiten Gehäusewandabschnitts 32, 28 bzw. Deckels 22 an das Schraubenschaftende dieser Schraube anschlägt, dessen Position durch verschrauben verändert werden kann. Es kann auch vorgesehen sein, dass die axialen Vorsprünge 52, 54 jeweils in einer entsprechenden Ringnut im Deckel 22 bzw. in der ersten bzw. zweiten Gehäusewand 32, 28 eintauchen und in diese Ringnut von außen eine einstellbare Schraube zur Einstellung der Anschlagposition mündet. Es kann auch vorgesehen sein, dass nur die ersten oder nur die zweiten Anschlagmittel hinsichtlich ihrer Anschlagposition einstellbar sind, oder beide.

Die Werte der Vorspannung, der Kompressionsrate bzw. Federrate und des mechanischen Anschlags 74, 88 können auch durch die Wahl unterschiedlicher bzw. verschiedener elastischer Elemente 10 ,12 bzw. Tellerfedern 60, 62 verändert werden.

Es kann auch vorgesehen sein - was in Fig. 1 nicht gezeigt ist - das die Mutter 16 gegenüber dem Gehäuse 18 mittels einer Verdrehsicherung gegen Relativverdrehung gesichert ist. Beispielsweise kann eine an der Mutter 16 radial außen angeordnete oder an der Gehäuseinnenseite sich in Axialrichtung erstreckende Nut vorgesehen sein, und an dem jeweils anderen Teil eine Passfeder oder dergleichen, so dass die Mutter 16 und das Gehäuse 18 in Axialrichtung relativbeweglich angeordnet sind, und bezüglich ihrer Längsachse drehfest gekoppelt sind.

Wenn sich die Gewindespindel 14 dreht bzw. Gewindespindel 14 rotiert, bewegt die Schiebemutter bzw. Mutter 16 axial das Gehäuse 18 über die Tellerfeder 60 bzw. 62 bzw. ein anders gestaltetes elastisches Element.

Es kann sein, dass Betätigungs- bzw. Schaltelastizität nicht in allen Situationen bzw. unter allen Bedingungen gewünscht ist. Es kann sein, dass keine Elastizität bzw. Betätigungs- bzw. Schaltelastizität gewünscht ist, wenn geringe Kräfte verwendet werden bzw. wirken. Entsprechend kann es unerwünscht sein, dass eine ausgeprägte elastische Bewegung stattfindet, wenn große Lasten bzw. Kräfte wirken.

In Fig. 1 ist eine Stellung gezeigt, die gegeben ist, wenn geringe Kräfte von der Mutter 16 auf das Gehäuse 18 übertragen werden. In dieser Gestaltung sind die Federn 60, 62 vorgespannt. Bei den gemäß Fig. 1 wirkenden geringen Kräften überträgt die Feder 60 die Last bzw. Belastung von der Mutter 16 auf das Gehäuse 18, ohne sich dabei zu verformen bzw. nennenswert zu verformen.

Wenn die Gewindespindel 14 in einer ersten Drehrichtung bzw. in einer ersten Orientierung der Drehrichtung belastet bzw. angetrieben wird, was durch den Pfeil 96 schematisch angedeutet ist, wird die Mutter 16 über die Gewindepaarung 38, 40 - zumindest auch - in einer ersten Orientierung der Axialrichtung treibend belastet, wie durch den Pfeil 98 schematisch angedeutet ist. Dabei wird die Mutter 16 in der ersten Orientierung 68 der Axialrichtung bewegt. Über die erste Tellerfeder 60 bzw. das erste elastische Element 10 belastet bzw. bewegt die Schiebemutter bzw. Mutter 16 das Gehäuse 18. Bei den Belastungsverhältnissen gemäß Fig. 1 ist die von der Mutter 16 auf das Gehäuse 18 übertragene Last bzw. Belastung verhältnismäßig gering, was durch die - im Verhältnis zu Fig. 2 geringe - Breite des Pfeils 100 angedeutet ist. Die übertragene Last ist - bei den Belastungsverhältnissen gemäß Fig. 1 - insbesondere geringer als die der Vorspannung entsprechende Last bzw. geringe als die Vorlast. Das erste elastische Element 10 bzw. die erste Tellerfeder 60 verformt sich bei den Belastungsverhältnissen nicht bzw. nicht nennenswert.

Wenn die Gewindespindel 14 in einer zweiten, der ersten entgegen gesetzten, Drehrichtung bzw. in einer ersten Orientierung der Drehrichtung belastet bzw. angetrieben wird, wird in entsprechender Weise die Mutter 16 und über das zweite elastische Element 12 bzw. die zweite Tellerfeder 62 das Gehäuse 18 entsprechend entgegengesetzt belastet bzw. bewegt.

Zwischen der Gewindespindel 14 und der Mutter 16 können Rechts- oder Linksgewinde vorgesehen sein.

Wenn nun die übertragende Kraft, bzw. Last bzw. die Kraft die von der Mutter 16 auf das Gehäuse 18 übertragen wird, erhöht wird und größer als die Vorlast bzw. die der Vorspannung entsprechenden Kraft im ersten elastischen Element 10 bzw. der ersten Tellerfeder 60 wird, beginnt sich dies elastische Element 10 bzw. diese erste Tellerfeder 60 zu verformen. Insbesondere ist dabei vorgesehen, dass sich die aktuelle Federlänge verändert, bzw. - bei einer Druckfeder - verkürzt.

Das Maß, um das sich das erste elastische Element 10 bzw. die Tellerfeder 60 verformen kann bzw. zusammengedrückt werden kann bzw. auf das es zusammengedrückt werden kann, ist begrenzt. Diese Begrenzung erfolgt über das erste Anschlagmittel 74.

Bei einer Belastung in der Gegenrichtung ist dies entsprechend.

Wenn eine sehr große Kraft aufgebracht wird bzw. von der Mutter 16 auf das erste Federelement 10 bzw. die Tellerfeder 60 übertragen wird, wird die Tellerfeder 60 so weit zusammengedrückt, bis die Schiebemutter bzw. Mutter 16 das Gehäuse 18 kontaktiert bzw. das Gehäuse axial kontaktiert.

Die Ansicht gemäß Fig. 2 zeigt nun diese Gestaltung in einer vollständig komprimierten Stellung bzw. in einem vollständig komprimierten Zustand, bei dem die ersten Anschlagmittel 74 in einer Anschlagposition sind.

Der erste Oberflächenbereich 78 der Mutter 16 kontaktiert- bei den in Fig. 2 gegebenen Belastungsverhältnissen- hierbei den ersten Oberflächenbereich 76 des Gehäuses 18.

In der Gestaltung gemäß Fig. 2 liegt das zweite elastische Element 12 bzw. zweite Tellerfeder 62 hier aber nicht mehr sowohl an der Mutter 16, als auch an der Gehäuse 18 bzw. dem Gehäusedeckel 22 an. Es kann aber auch vorgesehen sein, dass Federelemente eingesetzt werden, bei denen hier ein Anliegen noch gegeben wäre bzw. dass der Deckel 22 entsprechend weiter in das Gehäuse 18 geschraubt ist.

Wie Fig. 2 entnommen werden kann, wird die Tellerfeder 60 in der Anschlagposition im Wesentlichen vollständig in der Vertiefung 56 der Mutter 16 aufgenommen.

Der Verformungs- bzw. Federweg des ersten elastischen Elements 10 bzw. der ersten Tellerfeder 60 ist, wie bereits angesprochen, begrenzt. Diese Begrenzung ist so, dass die Feder 60 nicht vollständig komprimiert werden kann, bzw. auf Block gehen kann, sondern vorher mittels der angesprochenen Anschlagmittel der Federweg begrenzt wird. Die vollständig komprimierte Stellung, die oben angesprochen wurde, ist also die, bei der in der einen der beiden möglichen Belastungsrichtungen die Feder maximal komprimiert ist, was nicht bedeutet, dass die Feder selbst, wenn sie in anderen Anwendungen verwendet würde, sich nicht weiter komprimieren lassen würde.

Durch die - vergleichsweise große - Breite des Pfeils 100 ist in Fig. 2 angedeutet, dass die Last bzw. Belastung bzw. die Gegenkraft größer ist, als in der Gestaltung gemäß Fig. 1.

Zur Fig. 2 sei ebenfalls angemerkt, dass bei Belastung der Welle in der Gegenrichtung das zweite Anschlagmittel 88 in entsprechender Weise in eine Anschlagposition gebracht werden kann bzw. die Belastung von der Gewindespindel 14 über die Mutter 16 und das zweite elastische Element 10 bzw. die zweite Tellerfeder 62 auf das Gehäuse 18 übertragen wird.

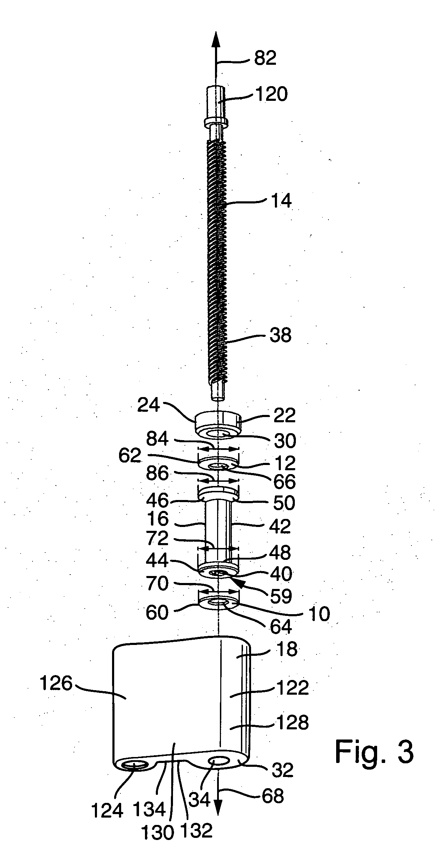

Fig. 3 zeigt eine beispielhafte, erfindungsgemäße Kraftfahrzeuggetriebe-Stellvorrichtung in schematischer Explosionsansicht. Diese Gestaltung kann insbesondere so sein, wie es anhand der Fig. 1 und 2 beschrieben wurde.

In Fig. 3 ist gezeigt, dass die Gewindespindel 14 einen Anschlussbereich 120 auf. Über diesen Anschlussbereich 120 kann eine Verbindung zu einer Antriebseinrichtung hergestellt werden. Eine solche Antriebseinrichtung ist vorzugsweise ein Elektromotor. Beispielsweise kann vorgesehen sein, dass die Gewindespindel 14 über den Anschlussbereich 120 drehfest mit der Motorausgangswelle eines Elektromotors gekoppelt ist. Es kann aber auch vorgesehen sein, dass Übersetzungsstufen zwischen einer solchen Motorausgangswelle und diesem Anschlussbereich 120 vorgesehen sind. Ferner kann vorgesehen sein, dass die Gewindespindel 14 gleichzeitig die Motorausgangswelle ist. Es ist insbesondere vorgesehen, dass ein solcher Elektromotor die Gewindespindel 14 in beiden Drehrichtungen antreiben kann, bzw. wahlweise in der einen oder der anderen. Dabei kann beispielsweise vorgesehen sein, dass der Elektromotor entsprechend umgeschaltet werden kann.

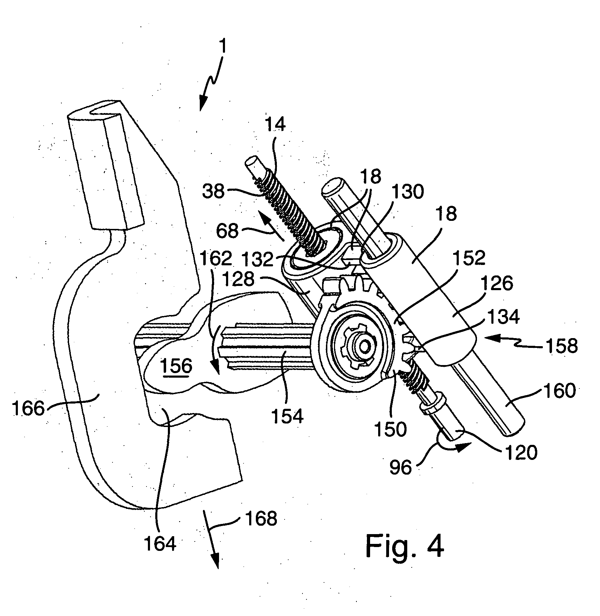

Die Gewindespindel 14 erstreckt sich im montierten Zustand durch die Kammer 36 bzw. durch das Gehäuse 18. Parallel zu der zentralen Achse 122 der montierten Gewindespindel 14 weist das Gehäuse eine außerhalb der Kammer 36 angeordnete Durchgangsöffnung 124 auf. Diese Durchgangsöffnung 124 ist Bestandteil einer Verdrehsicherung bzw. einer Linearführung für das Gehäuse 18 und dient der Aufnahme einer Führungsstange, die beispielhaft in der Fig. 4 gezeigt ist. Zwischen dem mit dieser Durchgangsöffnung 124 versehenen Gehäuseabschnitt 126 und dem Gehäuseabschnitt 128, in welchem die Kammer 36 angeordnet ist, ist ein Gehäuseabschnitt 130 vorgesehen, der eine Verzahnung 132 bzw. eine Zahnstange 134 aufweist.

Fig. 4 zeigt eine beispielhafte Gestaltung einer erfindungsgemäßen Getriebebetätigungseinrichtung bzw. Stellvorrichtung in dreidimensionaler schematischer Ansicht. Die in Fig. 4 gezeigte Stellvorrichtung kann beispielsweise ferner so gestaltet sein, wie es anhand der Fig. 1 und 2 erläutert wurde, und / oder so, wie es anhand der Fig. 3 erläutert wurde.

In Fig. 4 ist gezeigt, dass eine an dem Gehäuse 18 angeordnete Verzahnung 132 bzw. angeordnete Zahnstange 134 in eine Verzahnung 150 bzw. ein Zahnradsegment 152 eingreift. Dieses Zahnradsegment 152 ist drehfest mit einer Schaltwelle 154 verbunden, welche wiederum drehfest an einem Schaltfinger 156 angeordnet ist. Es kann auch vorgesehen sein, dass die Verzahnung 150 bzw. das Zahnradsegment 152, in welcher bzw. welches die Verzahnung 132 bzw. die Zahnstange 134 eingreift, direkt am Schaltfinger 156 vorgesehen ist.

Das Gehäuse 18 weist eine Verdrehsicherung 158 auf. Diese Verdrehsicherung 158 ist so, dass im Wesentlichen verhindert wird, dass das Gehäuse 18 um die Längsachse 122 der Spindel 14, oder eine hierzu parallele Achse, gedreht werden kann. Diese Verdrehsicherung 158 weist eine bereits in Fig. 3 angesprochene Durchgangsöffnung 124 auf, in welcher eine Führungsstange 160 aufgenommen wird. Die Führungsstange 160 ist vorzugsweise fest gelagert, und zwar beispielsweise an einem Gehäuse, das von dem Gehäuse 18 verschieden ist und gegenüber welchem das Gehäuse 18 beweglich angeordnet ist. Die Führungsstange 160 wird in der in der Durchgangsöffnung 124 des Gehäuses 118 aufgenommen. Die Durchgangsöffnung 124 des Gehäuses 18 bzw. das Gehäuse 18 ist axialbeweglich an der Führungsstange 160 angeordnet. Die Führungsstange 160 kann auch so in der Durchgangsöffnung 124 des Gehäuses 118 angeordnet sein, dass allein diese Anordnung eine Drehbeweglichkeit des Gehäuses 118 um die Führungsstange 160 ermöglichen würde, welche aber dadurch verhindert wird, dass Gehäuse 18 an einer zweiten Stelle, insbesondere im Bereich der Kammer, ebenfalls gehalten wird. Die Führungsstange 160 ist im Wesentlichen parallel zur Längsachse 122 der Spindel 14 angeordnet.

Das Zahnradsegment 152 ist im Wesentlichen viertelkreisförmig gestaltet, bzw. ein viertelkreisförmiges Zahnradsegment; dieses Teil kann auch als Quadrant bezeichnet werden. Es kann aber auch einen anderen Winkelbereich abdecken, wie beispielsweise einen Drittelkreis oder ein anderes Segmentteil. Es kann aber auch ein Zahnrad sein.

Wenn nun die Gewindespindel 14 in der ersten Drehrichtung 96 angetrieben wird, wird, wie bereits oben beschrieben, das Gehäuse 18 über die Mutter 16 und das erste elastische Element 10 axial in der ersten Orientierung 68 belastet bzw. bewegt. Die Verdrehsicherung 158 verhindert hierbei, dass sich das Gehäuse 18 nicht verdreht, sondern im wesentlich rein axial bewegt wird.

Bei dieser axialen Bewegung verschiebt sich die Verzahnung 132 bzw. die Zahnstange 134, die somit durch diese Verschiebung bewirkt, dass die Verzahnung 150 bzw. das Zahnradsegment 152 verdreht bzw. verschwenkt wird. Das fest mit der Schaltwelle 154 verbundene Zahnradsegment 152 bewirkt somit, dass diese Schaltwelle 154 entsprechend verschwenkt bzw. verdreht wird. Über die drehfeste Kopplung mit dem Schaltfinger 156 wird wiederum bewirkt, dass auch dieser Schaltfinger 156 entsprechend verdreht bzw. verschwenkt wird, was durch den Pfeil 162 schematisch angedeutet ist.

In der in Fig. 4 dargestellten Position ist der Schaltfinger 156 so angeordnet, dass er innerhalb eines inneren Profils 164 bzw. einer in Axialrichtung gegebenen Durchgangsöffnung, die seitlich offen ist, einer Schaltschiene 166 angeordnet ist. Wenn die Schaltschiene 166 durch Verdrehen des Schaltfingers 156 in dieser Öffnung bzw. diesem Profil 164 belastet wird, wird die Schaltschiene 166 axial bzw. in Längsrichtung dieses Schaltfingers 156, die durch den Pfeil 186 schematisch angedeutet ist, bewegt bzw. belastet. Hierdurch kann beispielsweise ein Synchronisationsring bzw. die Synchronisation eines Getriebes belastet bzw. betätigt werden bzw. in einen Gang im Getriebe geschaltet werden.

Wenn die Gewindespindel 14 in der Gegenrichtung angetrieben wird, drehen sich diese Bewegungsverhältnisse um, so dass die Schaltschiene 166 der dem Pfeil 168 entgegen gesetzten Richtung belastet bzw. bewegt wird.

Es ist also in Fig. 4 in teilweiser schematischer Ansicht insbesondere eine Getriebebetätigungs- bzw. Getriebeschalteinrichtung gezeigt. Aus Fig. 4 geht insbesondere hervor, wie das Gehäuse 18 den Schaltfinger 156 und die Schaltschiene 166 bewegt. Insbesondere ist dort auch gezeigt, dass in das Gehäuse 18 eine Zahnstange integriert ist, die einen Quadranten bzw. ein mit versehenen Quadranten Verzahnung bzw. Zahnradsegment, eine Schaltwelle und den Schaltfinger 156 bewegt bzw. dreht bzw. schwenkt.

Der Schaltfinger 156 schiebt sich gegen ein inneres Profil der Schaltschiene, bzw. wird der Schaltfinger 156 gegen ein inneres Profil der Schaltschiene 156 bewegt bzw. geschoben, und der Schaltfinger 156 bewegt diese Schaltschiene 156 linear.

In einer Betätigungsvorrichtung für ein Kraftfahrzeuggetriebe können mehrere Schaltschienen oder dergleichen angeordnet sein. Um zwischen diesen Schaltschienen auswählen zu können bzw. das so genannte "Wählen" von Gängen zu verwirklichen, können mehrere solcher Schaltschienen im wesentlichen parallel angeordnet sein, und zwar so, dass in einer Neutralstellung einer jeweiligen Schaltschiene der Schaltfinger axial durch die entsprechenden Öffnungen in den Schaltfingern bewegt werden kann. Durch Wahl der entsprechenden Position kann "gewählt" werden, welche Schaltschiene in einem folgenden Schaltvorgang mittels einer in Fig. 4 gezeigten Stelleinrichtung betätigt werden soll. Es kann vorgesehen sein, dass eine zusätzliche Stelleinrichtung vorgesehen ist, die diese Längsverschiebung des Schaltfingers 156 in Richtung der Schaltwelle 154 bewirken kann. Diese zweite Stelleinrichtung kann auch auf andere Art und Weise gestaltet sein als die erfindungsgemäße Gestaltung einer Stelleinrichtung. Es kann auch vorgesehen sein, dass eine solche zusätzliche Stelleinrichtung einen Elektromotor aufweist. Eine solche zusätzliche Stellenrichtung kann bewirken, dass die Schaltwelle 154 in ihrer Achsrichtung bewegt werden kann. Es kann auch so gestaltet sein, dass bewegt wird, dass der Schaltfinger 156 entlang der Schaltwelle 154 axial bewegt werden kann.

Insbesondere bei einer Kombination mit einer derartigen Einrichtung zur Verstellung der axialen Position des Schaltfingers ist vorzugsweise vorgesehen, dass die Breite der Zahnstange 134 bzw. Verzahnung 132 entsprechend an den axialen Verstellbereich des Schaltfingers 156 angepasst ist

### Bezugszeichenliste

- 1: Kraftfahrzeuggetriebe-Stellvorrichtung
- 10: erstes elastisches Element
- 12: zweites elastisches Element
- 14: Gewindespindel
- 16: Mutter
- 18: Gehäuse
- 20: dritte Gehäuseöffnung
- 22: Deckel bzw. Stutzen
- 24: (Außen)Gewinde an 22
- 26: (Innen)Gewinde an 18 in 20
- 28: zweiter Gehäusewandabschnitt
- 30: Durchgangsöffnung in 22
- 32: erste Gehäusewand bzw. erster Gehäusewandabschnitt von 18
- 34: erste Gehäuseöffnung
- 36: erste Kammer
- 38: Gewinde von 14
- 40: Gewinde von 16
- 42: zylindrischer Abschnitt von 16
- 44: erster Ringflansch von 16
- 46: zweiter Ringflansch von 16
- 48: erstes axiales Ende von 42
- 50: zweites axiales Ende von 42
- 52: erster axialer Vorsprung an 44
- 54: zweiter axialer Vorsprung an 44
- 56: erste Vertiefung in 16
- 58: zweite Vertiefung in 16
- 59: Durchgangsöffnung in 16
- 60: erste Tellerfeder
- 62: zweite Tellerfeder
- 64: Durchgangsöffnung in 60
- 66: Durchgangsöffnung in 62
- 68: Pfeil
- 70: Außenmaß bzw. Außendurchmesser von 60
- 72: Außendurchmesser bzw. Außenmaß von 16 bzw. 44
- 74: erstes Anschlagmittel
- 76: erster Oberflächenbereich von 18
- 78: erster Oberflächenbereich von 16
- 80: Stirnfläche von 52
- 82: Pfeil, zweite Orientierung der Axialrichtung
- 84: Außenmaß bzw. Außendurchmesser 12 von 62
- 86: Außendurchmesser bzw. Außenmaß von 16 bzw. 46
- 88: zweites Anschlagmittel
- 90: zweiter Oberflächenbereich von 18
- 92: zweiter Oberflächenbereich von 16
- 94: Stirnfläche von 54
- 96: Pfeil, erste Drehrichtung bzw. erste Orientierung der Drehrichtung von 14
- 98: Pfeil, Belastung in erster Orientierung der Axialrichtung
- 100: Pfeil
- 120: Anschlussbereich von 14
- 122: zentrale Achse von 14
- 124: Durchgangsöffnung in 18
- 126: Gehäuseabschnitt
- 128: Gehäuseabschnitt
- 130: Gehäuseabschnitt
- 132: Verzahnung an 18
- 134: Zahnstange an 18
- 150: Verzahnung
- 152: Zahnradsegment
- 154: Schaltwelle
- 156: Schaltfinger
- 158: Verdrehsicherung
- 160: Führungsstange
- 162: Pfeil
- 164: inneres Profil bzw. Öffnung in 166
- 166: Schaltschiene
- 168: Pfeil

## Patentansprüche

1. Kraftfahrzeuggetriebe-Stellvorrichtung zum Erzeugen von Stellbewegungen, welche eine beweglich angeordnete Gewindespindel (14) aufweist, die mit ihrem Gewinde (38) in ein Gewinde (40) einer beweglich angeordneten Mutter (16) eingreift, so dass diese Gewindespindel (14) diese Mutter (16) belasten bzw. treibend belasten kann, und welche ferner ein beweglich sowie gegenüber der Mutter (16) relativbeweglich angeordnetes Gehäuse (18) aufweist, sowie zwei elastische Elemente (10, 12), wobei ein erstes (10) dieser elastischen Elemente (10, 12) so zwischen der Mutter (16) und dem Gehäuse (18) angeordnet ist, dass die Mutter (16) das Gehäuse (18) in einer ersten Orientierung ihrer Axialrichtung über dieses erste elastische Element (10) belasten bzw. treibend belasten kann, und wobei das zweite (12) dieser elastischen Elemente (10, 12) so zwischen der Mutter (16) und dem Gehäuse (18) angeordnet ist, dass die Mutter (16) das Gehäuse (18) über dieses zweite elastische Element (12) in einer zweiten, der ersten entgegen gesetzten, Orientierung ihrer Axialrichtung belasten bzw. treibend belasten kann.

2. Kraftfahrzeuggetriebe-Stellvorrichtung nach Anspruch 1, **dadurch gekennzeichnet, dass** die Mutter (16) in dem Gehäuse (18) gefangen ist.

3. Kraftfahrzeuggetriebe-Stellvorrichtung nach einem der vorangehenden Ansprüche, **dadurch gekennzeichnet, dass** Gehäuse (18) in zwei gegenüberliegenden Gehäusewänden (28, 32) jeweils eine Öffnung (30, 34) aufweist, wobei sich die Gewindespindel (14) durch diese Öffnungen (30, 34) erstreckt.

4. Kraftfahrzeuggetriebe-Stellvorrichtung nach einem der vorangehenden Ansprüche, **dadurch gekennzeichnet, dass** das Gehäuse (18) einen verstellbaren und / oder lösbaren Deckel bzw. Pfropfen bzw. Stutzen (22) aufweist.

5. Kraftfahrzeuggetriebe-Stellvorrichtung nach Anspruch 4, **dadurch gekennzeichnet, dass** der Deckel bzw. Pfropfen bzw. Stutzen (22) ein Gewinde (24) aufweist und mit diesem Gewinde (24) in ein am Gehäuse (18) angeordnetes Gewinde (26) geschraubt ist.

6. Kraftfahrzeuggetriebe-Stellvorrichtung nach einem der Ansprüche 4 und 5, **dadurch gekennzeichnet, dass** der Deckel bzw. Pfropfen bzw. Stutzten (22) eine Durchgangsöffnung (30, 34) aufweist, durch welche sich die Gewindespindel (14) erstreckt.

7. Kraftfahrzeuggetriebe-Stellvorrichtung nach einem der vorangehenden Ansprüche, **gekennzeichnet durch** eine Verdrehsicherung (158), mittels welcher das Gehäuse (18) gegen Verdrehung gesichert ist.

8. Kraftfahrzeuggetriebe-Stellvorrichtung nach Anspruch 7, **dadurch gekennzeichnet, dass** die Verdrehsicherung (158) eine Linearführung aufweist.

9. Kraftfahrzeuggetriebe-Stellvorrichtung nach einem der Ansprüche 7 und 8, **dadurch gekennzeichnet, dass** die Verdrehsicherung (158) eine parallel zur Gewindespindel (14) angeordnete Führungsstange (160) aufweist, welche sich durch das Gehäuse (18) erstreckt.

10. Kraftfahrzeuggetriebe-Stellvorrichtung nach Anspruch 9, **dadurch gekennzeichnet, dass** die Mutter (16) sowie die zwei elastische Elemente (10, 12) in dem Gehäuse (18) in einer dort gebildeten Kammer (36) angeordnet sind, wobei sich außerhalb dieser Kammer (36) wenigstens eine Durchgangsöffnung (124) durch das Gehäuse (18) erstreckt, in welcher die Führungsstange (160) aufgenommen ist.

11. Kraftfahrzeuggetriebe-Stellvorrichtung nach einem der vorangehenden Ansprüche, **dadurch gekennzeichnet, dass** das Gehäuse (18) mit wenigstens einer Schaltwelle (154) gekoppelt ist.

12. Kraftfahrzeuggetriebe-Stellvorrichtung nach einem der vorangehenden Ansprüche, **dadurch gekennzeichnet, dass** das Gehäuse (18) mit wenigstens einem Schaltfinger (156) gekoppelt ist.

13. Kraftfahrzeuggetriebe-Stellvorrichtung nach einem der vorangehenden Ansprüche, **dadurch gekennzeichnet, dass** das Gehäuse (18) eine Verzahnung (132) trägt.

14. Kraftfahrzeuggetriebe-Stellvorrichtung nach Anspruch 13, **dadurch gekennzeichnet, dass** ein Zahnrad oder ein Zahnradsegment (152) in die Verzahnung (132) des Gehäuses (18) eingreift.

15. Kraftfahrzeuggetriebe-Stellvorrichtung nach Anspruch 14, das Gehäuse (18) über seine Verzahnung (132) sowie das in diese Verzahnung (132) eingreifende Zahnrad bzw. Zahnradsegment (152) eine Schaltstange (154) und / oder einen Schaltfinger (156) treibend belasten kann.

16. Kraftfahrzeuggetriebe-Stellvorrichtung nach einem der vorangehenden Ansprüche, **dadurch gekennzeichnet, dass** das erste (10) und / oder das zweite elastische Element (12) eine Feder ist.

17. Kraftfahrzeuggetriebe-Stellvorrichtung nach Anspruch 16, **dadurch gekennzeichnet, dass** das erste (10) und / oder das zweite elastische Element (12) eine Tellerfeder (60, 62) ist.

18. Kraftfahrzeuggetriebe-Stellvorrichtung nach einem der vorangehenden Ansprüche, **dadurch gekennzeichnet, dass** das erste (10) und / oder das zweite elastische Element (12) vorgespannt ist.

19. Kraftfahrzeuggetriebe-Stellvorrichtung nach Anspruch 18, **dadurch gekennzeichnet, dass** das eine Einstelleinrichtung (22, 24, 26) vorgesehen ist, mittels welcher die Vorspannung des ersten (10) und / oder des zweiten elastische Elements (12) einstellbar ist.

20. Kraftfahrzeuggetriebe-Stellvorrichtung nach einem der Ansprüche 4 bis 6 und nach Anspruch 19, **dadurch gekennzeichnet, dass** die Einstelleinrichtung (22, 24, 26) den Deckel bzw. Pfropfen bzw. Stutzen (22) aufweist.

21. Kraftfahrzeuggetriebe-Stellvorrichtung nach einem der vorangehenden Ansprüche, **dadurch gekennzeichnet, dass** wenigstens ein erstes Anschlagmittel (74) vorgesehen ist, durch welches der Verformungs- bzw. Federweg des erste elastischen Elements bzw. der ersten Feder begrenzt ist.

22. Kraftfahrzeuggetriebe-Stellvorrichtung nach einem der vorangehenden Ansprüche, **dadurch gekennzeichnet, dass** wenigstens ein zweites Anschlagmittel (88) vorgesehen ist, durch welches der Verformungs- bzw. Federweg des zweiten elastischen Elements bzw. der zweiten Feder begrenzt ist.

23. Kraftfahrzeuggetriebe-Stellvorrichtung nach einem der Ansprüche 21 und 22, **dadurch gekennzeichnet, dass** die Anschlagsposition des ersten (74) und / oder der zweiten Anschlagmittels (88) veränderbar und / oder einstellbar ist.

24. Kraftfahrzeuggetriebe-Stellvorrichtung nach einem der vorangehenden Ansprüche, **dadurch gekennzeichnet, dass** die Mutter (16) eine erste Vertiefung (56) aufweist, in welcher das erste elastische Element (10) aufgenommen ist.

25. Kraftfahrzeuggetriebe-Stellvorrichtung nach Anspruch 21 und nach Anspruch 24, **dadurch gekennzeichnet, dass** ein außerhalb dieser ersten Vertiefung (56) an diese erste Vertiefung (56) angrenzender erster Oberflächenabschnitt (78) der Mutter (16) im Zusammenwirken mit einem ersten Oberflächenabschnitt (76) des Gehäuses als erstes Anschlagmittel (74) wirkt.

26. Kraftfahrzeuggetriebe-Stellvorrichtung nach einem der vorangehenden Ansprüche, **dadurch gekennzeichnet, dass** die Mutter (16) eine zweite Vertiefung (58) aufweist, in welcher das zweite elastische Element (12) aufgenommen ist.

27. Kraftfahrzeuggetriebe-Stellvorrichtung nach Anspruch 22 und nach Anspruch 26, **dadurch gekennzeichnet, dass** ein außerhalb dieser zweiten Vertiefung (58) an diese zweiten Vertiefung (58) angrenzender zweiter Oberflächenabschnitt (92) der Mutter (16) im Zusammenwirken mit einem zweiten Oberflächenabschnitt (90) des Gehäuses (18) als zweites Anschlagmittel (88) wirkt.

28. Kraftfahrzeuggetriebe-Stellvorrichtung nach einem der vorangehenden Ansprüche, **dadurch gekennzeichnet, dass** die Mutter (16) radial außen von dem Gehäuse (18) geführt wird.

29. Kraftfahrzeuggetriebe-Stellvorrichtung nach einem der vorangehenden Ansprüche, **dadurch gekennzeichnet, dass** die Gewindespindel (14) axialfest und um ihrer Längsachse (128) drehbeweglich gelagert ist.

30. Kraftfahrzeuggetriebe-Stellvorrichtung nach einem der vorangehenden Ansprüche, **dadurch gekennzeichnet, dass** ein Elektromotors vorgesehen ist.

31. Kraftfahrzeuggetriebe-Stellvorrichtung nach Anspruch 30, **dadurch gekennzeichnet, dass** ein elektronisches Steuergerät zur Steuerung des Elektromotor zum Belasten und / oder Antreiben der Gewindespindel (14) vorgesehen.

32. Kraftfahrzeug-Getriebeeinrichtung mit einer Betätigungseinrichtung zum Steuern von Gangwechselvorgängen der Kraftfahrzeug-Getriebeeinrichtung, wobei mittels dieser Betätigungseinrichtung ein jeweiliger Gang gewählt werden kann, in einen jeweiligen Gang der Kraftfahrzeug-Getriebeeinrichtung geschaltet werden und die Kraftfahrzeug-Getriebeeinrichtung in Neutral geschaltet werden, kann, **dadurch gekennzeichnet, dass** diese Betätigungseinrichtung eine Kraftfahrzeuggetriebe-Stellvorrichtung gemäß einem der Ansprüche 1 bis 31 aufweist.

33. Kraftfahrzeug-Getriebeeinrichtung nach Anspruch 32, **dadurch gekennzeichnet, dass** diese Kraftfahrzeug-Getriebeeinrichtung als automatisiert betätigbare Kraftfahrzeug-Getriebeeinrichtung gestaltet ist.

34. Kraftfahrzeug-Getriebeeinrichtung nach einem der Ansprüche 31 und 32, **dadurch gekennzeichnet, dass** diese Kraftfahrzeug-Getriebeeinrichtung als Parallelschaltgetriebe (PSG) gestaltet ist.

35. Verwendung einer Kraftfahrzeuggetriebe-Stellvorrichtung gemäß einem der Ansprüche 1 bis 31 zum Betätigen einer Kraftfahrzeug-Getriebeeinrichtung.

36. Verwendung nach Anspruch 35, **dadurch gekennzeichnet, dass** die Kraftfahrzeuggetriebe-Stellvorrichtung zum Schalten in Gänge der Kraftfahrzeug-Getriebeeinrichtung verwendet wird.
